# EUROPÄISCHE PATENTSCHRIFT

(11) **EP 3 602 509 B1**
(45) Veröffentlichungstag und Bekanntmachung des Hinweises auf die Patenterteilung: **18.09.2024**
(21) Anmeldenummer: 19703080.2
(22) Anmeldetag: 04.02.2019
(51) Int. Cl.: G07G 1/00, G07G 3/00, G06Q 20/18, G06Q 20/20

(54) **SELBSTBEDIENUNGSKASSENSYSTEM**
SELF-SERVICE CHECKOUT SYSTEM
SYSTÈME DE CAISSE EN LIBRE-SERVICE

(30) Priorität: 22.02.2018 DE 102018103972
(43) Veröffentlichungstag der Anmeldung: 05.02.2020
(73) Patentinhaber: Wanzl GmbH & Co. KGaA, 89340 Leipheim (DE)
(72) Erfinder: HÄMMERLE, Jürgen, 89312 Günzburg (DE)
(86) Internationale Anmeldenummer: PCT/EP2019/052601
(87) Internationale Veröffentlichungsnummer: WO 2019/162069

(56) Entgegenhaltungen:
- WO-A1-2018/013046
- DE-U1- 202009 001 237
- US-A1- 2014 225 734
- US-A1- 2014 313 330
- US-A1- 2015 039 458

## Beschreibung

Die vorliegende Erfindung betrifft ein Selbstbedienungskassensystem mit einer Selbstbedienungskasse und einer Überwachungseinrichtung. Ferner betrifft die vorliegende Erfindung eine Überwachungseinrichtung und ein Verfahren zur Erfassung eines Bezahlvorgangs an einer Selbstbedienungskasse.

Selbstbedienungskassen (kurz SB-Kasse) sind Kassen im Einzelhandel, bei denen kein fester Kassierer arbeitet, sondern die Kunden selbst die Waren einscannen und bezahlen. In der Regel beaufsichtigt ein Mitarbeiter in der Nähe den Einkaufsvorgang an mehreren Kassen und hilft, falls Probleme auftreten.

Selbstbedienungskassen im Einzelhandel haben den Vorteil, dass sich die Personalkosten einer Filiale erheblich reduzieren lassen. Darüber hinaus haben Selbstbedienungskassen auch einen geringeren Platzbedarf im Vergleich zu konventionellen Kassen. Indem auf gleicher Fläche mehr Kassen aufgestellt werden können, kann die Wartezeit beim Bezahlen für die Kunden effektiv verringert werden.

Die verringerte oder fehlende Aufsicht an den Selbstbedienungskassen führt jedoch auch zu Missbrauch. So können Kunden den Laden verlassen und Artikel mitnehmen, ohne zu bezahlen. Eine Möglichkeit dies zu verhindern besteht darin, Ausgangsanlagen, wie Ausgangschleusen oder automatische Türen an einem Ende der Selbstbedienungskassen anzuordnen. Diese ermöglichen ein Verlassen des Ladens nur, wenn der Kunde an der Selbstbedienungskasse bezahlt hat und die Kasse die Schleuse öffnet.

Um Platz einzusparen, ist es vorteilhaft, eine Ausgangsanlage für mehrere Selbstbedienungskassen zu verwenden. In diesem Fall wird einem Kunden am Ende vom Bezahlvorgang ein Beleg mit einem Code ausgedruckt, den dieser anschließend an der Schleuse eingescannt, um die Schleuse zu öffnen.

WO 2018/013046 A1 schlägt vor den letztgenannten Vorgang zu automatisieren. Eine Sensoranordnung überwacht den Bereich um die Selbstbedienungskassen, identifiziert einzelne Personen und ordnet diesen einen Zahlungsvorgang am Kassenautomat zu. Anschließend öffnet das System die automatische Schleuse selbsttätig, wenn der Kund vor diese tritt. Die Automatisierung hat den Vorteil, dass das Ausdrucken eines Beleges und das anschließende Scannen an der Ausgangsschleuse entfallen können und so der Vorgang für den Kunden insgesamt vereinfacht wird.

Nachteilig ist jedoch, dass hierbei eine Person eindeutig identifiziert wird und der Person ein konkreter Bezahlvorgang zugeordnet wird. Hierzu bedarf es der Integration der Überwachungseinrichtung in das Bezahlsystem, was bei älteren, proprietären Kassensystemen teilweise nur schwer oder gar nicht möglich ist, oder aber bei einem neueren System nicht erwünscht ist. Darüber hinaus ist eine derartige Überwachung und Zuordnung in vielen Länder aus datenschutzrechtlichen Gründen nur eingeschränkt oder gar nicht erlaubt bzw. nur mit Einwilligung der überwachten Person, was organisatorisch hier jedoch nicht möglich ist.
US 2015/0039458 A1 zeigt ein Checkout-System, welches über Sensoren Produkte identifiziert und Gesten erkennt, die eine Kaufentscheidung eines Kunden anzeigen. Begibt sich der Kunde anschließend zum Ausgang, wird ein elektronischer Bezahlvorgang automatisch autorisiert.

Vor diesem Hintergrund ist es eine Aufgabe der vorliegenden Erfindung, ein Selbstbedienungskassensystem eingangsgenannter Art anzugeben, welches die vorstehend genannten Probleme vermeidet.

Gemäß einem Aspekt der vorliegenden Erfindung wird diese Aufgabe durch ein Selbstbedienungskassensystem gemäß Anspruch 1.

Gemäß einem weiteren Aspekt wird die Aufgabe gelöst durch eine Überwachungseinrichtung gemäß Anspruch 10.

Gemäß einem weiteren Aspekt wird die Aufgabe ferner gelöst durch ein Verfahren gemäß Anspruch 11.

Es ist somit eine Idee der vorliegenden Erfindung einen Bezahlvorgang eines Kunden anhand dessen Fortbewegung und dessen Gesten in einem Überwachungsbereich einer Selbstbedienungskasse zu bestimmen. Fortbewegung heißt in diesem Zusammenhang eine Bewegung der Person im Raum von einem Ort zu einem anderen, wobei auch eine Bewegung mit Rückkehr zum Ausgangspunkt dazuzählt. Eine Geste ist im Gegensatz dazu eine Bewegung von Körperteilen (besonders der Arme und Hände), um eine bestimmte Aktion auszuführen.

Da bei einem Bezahlvorgang ein Kunde immer ähnliche Bewegungen vornimmt, können Muster aus dessen Bewegung und dessen Gestik erstellt werden. Ein Muster kann beispielsweise die folgenden Bewegungen abdecken: Führen eines Handscanners über die zu bezahlenden Artikel, Ablesen eines Endbetrags auf einem Display, Einstecken einer Kreditkarte in eine dafür vorgesehene Öffnung, Eintippen eines PIN-Codes an dem Bezahlterminal und Entgegennahme eines Beleges aus einem Belegdrucker. Die einzelnen Bewegungen können von der Sensoranordnung durch einen oder mehrere Sensoren erfasst werden und zu einem Signal, welches charakteristisch für dieses Bewegungsmuster ist, zusammengesetzt werden. Ein erfindungsgemäßes Bewegungsmuster umfasst somit nicht nur eine örtliche Fortbewegung, sondern insbesondere auch die lokale Bewegung von Körperteilen.

Indem für einen Bezahlvorgang charakteristische Muster in einem Mustervorrat hinterlegt werden, kann durch einen Abgleich mit diesen Mustern festgestellt werden, ob ein Kunde bezahlt hat oder nicht. Die Überwachungseinrichtung kann somit ohne weitere Hilfe bestimmen, ob ein Bezahlvorgang durch einen Kunden stattgefunden hat. Die Erfassung des Bezahlvorgangs kann somit alternativ oder ergänzend zu anderen Erfassungen des Bezahlvorgangs eingesetzt und vorteilhaft auch bei älteren Systemen einfach ergänzt werden.

Die Auswerteeinheit ist dazu ausgebildet, den Bezahlvorgang unabhängig von einer Registrierung der Bezahlung durch den Bezahlautomaten zu erfassen.

Die Überwachungseinrichtung kann somit losgelöst und unabhängig von der Selbstbedienungskasse eingerichtete und betrieben werden. Insbesondere können personenbezogene Daten vollständig getrennt von dem Bezahlautomaten durch die Überwachungseinrichtung erfasst, gespeichert und ausgewertet werden, um einschlägige Datenschutzvoraussetzungen zu erfüllen.

Erfindungsgemäß umfasst die Sensoranordnung mindestens einen optischen Sensor, insbesondere eine Kamera, welcher die Fortbewegung des Kunden im Überwachungsbereich und/oder die Geste des Kunden erfasst.

Ein optischer Sensor hat den Vorteil, dass sowohl die Fortbewegung als auch die Gesten eines Kunden mit einem Sensor erfasst werden können. Die Überwachungseinrichtung kann so besonders einfach implementiert werden.

In einer weiteren Ausgestaltung umfasst die Sensoranordnung einen Sensor zur Lokalisierung von Einkaufswagen und/oder Einkaufskörben, insbesondere einen RFID-Leser zum Auslesen von RFID-Tags an den Einkaufswagen und/oder Einkaufskörben, und wobei die Fortbewegung des Kunden in dem Überwachungsbereich anhand der lokalisierten Einkaufswagen und/oder Einkaufskörbe erfolgt.

In dieser Ausgestaltung erfolgt die Erfassung der Fortbewegung über die Erfassung der verwendeten Einkaufswagen und/oder Einkaufskörbe. Dies hat den Vorteil, dass für die Fortbewegung lediglich die Einkaufswagen und/oder Einkaufskörbe erfasst werden müssen. Diese lassen sich leicht mit elektrischen Markierungen ausstatten, die präzise lokalisiert werden können. Auf diese Weise kann die Fortbewegung einfach und präzise bestimmt werden, wobei die Sensoranordnung relativ einfach ausgestaltet sein kann.

In einer weiteren Ausgestaltung umfassen die Muster aus dem Mustervorrat sowohl Bewegungs- als auch Zeitprofile.

Indem die Bewegungsmuster zusätzlich mit Zeitprofilen versehen werden, kann eine besonders präzise Bestimmung eines Bezahlvorgangs gewährleistet werden. Insbesondere kann die gesamte erfasste Bewegung in einzelne charakteristische Bewegungsabschnitte zerlegt werden. Jedem Abschnitt kann einer Tätigkeit zugeordnet werden, wobei an der Reihenfolge und der zeitlichen Abfolge der einzelnen Tätigkeiten zuverlässig bestimmt werden kann, ob ein Bezahlvorgang stattgefunden hat oder nicht.

In einer weiteren Ausgestaltung ist die Auswerteeinheit eine selbstlernende Einheit, die dazu eingerichtet ist, den Mustervorrat dynamisch anzupassen.

In dieser Ausgestaltung kann der Mustervorrat dynamisch angepasst und erweitert werden. In einer Lernphase können dem System somit neue oder geänderte Muster beigebracht werden, bspw. wenn sich der Aufbau der Selbstbedienungskasse verändert hat. Durch diese Ausgestaltung wird das System besonders flexibel einsetzbar. Insbesondere kann ein einheitliches Ausgangssystem mit einem anfänglichen Mustervorrat für verschiedene Selbstbedienungskassen eingesetzt werden, wobei die Anpassung an die spezifischen Gegebenheiten dynamisch erfolgt.

In einer weiteren Ausgestaltung weist die Auswerteeinheit mindestens eine Einheit zur Vernetzung mit einer Vielzahl weiterer Auswerteeinheit auf, und der Mustervorrat ist ein gemeinsamer Mustervorrat der Vielzahl weiterer Auswerteeinheiten und der Auswerteeinheit.

In dieser Ausgestaltung kann die Auswerteeinheit mit weiteren Auswerteeinheiten kooperieren und einen gemeinsamen Mustervorrat verwenden. Dies hat den Vorteil, dass bereits erprobte Muster wiederverwendet werden können und eine schnelle Inbetriebnahme der Überwachungseinrichtung möglich ist. Insbesondere wenn die Auswerteeinheiten selbstlernende Einheiten sind, kann der Mustervorrat schnell und effizient erweitert werden. Die Auswerteeinheit ist hierfür bevorzugt als cloudbasierte Lösung implementiert.

In einer weiteren Ausgestaltung ist die Auswerteeinheit ferner dazu ausgebildet, mindestens ein weiteres Muster aus dem Signal zu extrahieren und mit Mustern aus einem weiteren Mustervorrat zu vergleichen, um ein weiteres definiertes Verhalten des Kunden in dem Überwachungsbereich zu erfassen.

In dieser Ausgestaltung kann neben einem Bezahlvorgang mindestens ein weiteres Verhalten bestimmt werden. Auf diese Weise können weitere Zustände oder Vorgänge erkannt werden, wie bspw. Überlast, Diebstahl, Manipulation oder anderes verdächtiges Verhalten. Die Überwachungseinrichtung kann somit auch für weitere Überwachungsaufgaben, vorzugweise ohne zusätzliche Hardware, herangezogen werden und damit andere System ergänzen oder ersetzen.

In einer weiteren Ausgestaltung umfasst das System ferner eine Ausgangsanlage, die dazu eingerichtet ist, in Abhängigkeit der Erfassung durch die Auswerteeinheit, den Kunden am Verlassen des Überwachungsbereichs zu hindern. Ferner in einer weiteren Ausgestaltung ist das System dazu eingerichtet, eine Aktion in Abhängigkeit der Erfassung durch die Auswerteeinheit auszuführen

Indem in Abhängigkeit der Erfassung unterschiedliche Aktionen ausgeführt werden können, kann in verschiedenen Situationen vorteilhaft unterschiedlich und der jeweiligen Situation angepasst reagiert werden. Die Reaktionen können Sprachnachrichten, akustische und stille Alarme, Kameraaufzeichnungen bis hin zu einer Blockade der Ausgangsanlage umfassen.

In einer besonders bevorzugten Ausgestaltung ist das System eingerichtet, unterschiedliche Aktionen in Abhängigkeit einer Position des Kunden in dem Überwachungsbereich auszuführen.

Auf diese Weise kann besonders dediziert und angemessen auf die jeweilige Situation reagiert werden. Insbesondere kann bei Verdachtsmomenten zunächst nur Personal still informiert werden und erst beim tatsächlichen Verlassen des Ladens ein Alarm ausgelöst werden. Auf diese Weise können besonders wirksam Fehlalarme verhindert werden.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels des erfindungsgemäßen Systems, und
- Fig. 2: ein Ablaufdiagramm eines Verfahrens gemäß einer bevorzugten Ausführungsform der Erfindung.

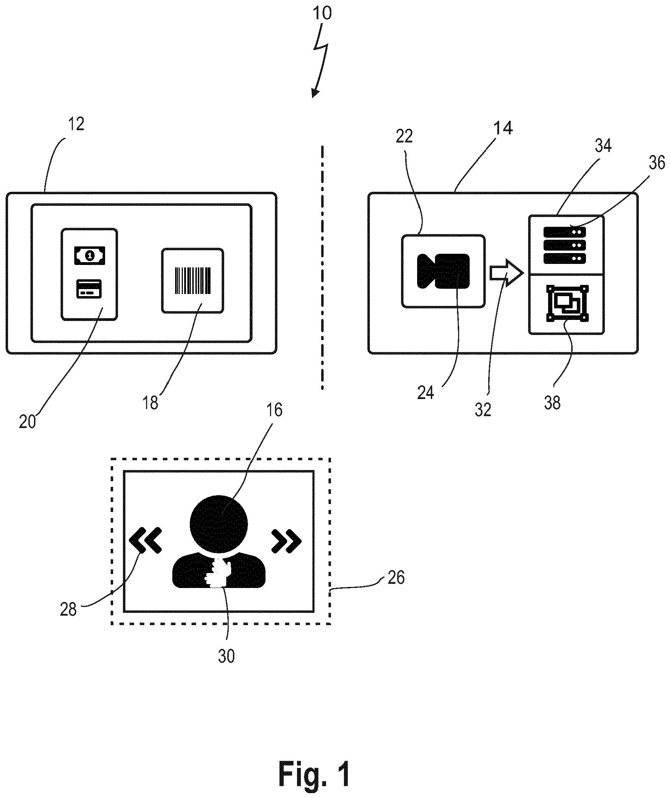

Fig. 1 zeigt eine schematische Darstellung eines Ausführungsbeispiels des erfindungsgemäßen Selbstbedienungskassensystems. In der Fig. 1 ist das System in seiner Gesamtheit mit der Bezugsziffer 10 bezeichnet.

Das System setzt sich aus einer Selbstbedienungskasse 12 und einer Überwachungseinrichtung 14 zusammen.

Die Selbstbedienungskasse 12 ist eine Kasse, die von einem Kunden 16 ohne einen Kassierer selbst bedient wird. Ein Kunde 16 scannt die jeweiligen Produkte mit einem Scanner 18 ein und zahlt anschließend den geforderten Betrag an einem Bezahlautomaten 20 mit einer Kreditkarte oder einem ähnlichen Zahlungsmittel. Anschließend verlässt der Kunde den Laden, vorzugsweise ohne weiteres Tun.

Letzteres ermöglicht in einem bevorzugten Ausführungsbeispiel die Überwachungseinrichtung 14. Diese umfasst eine Sensoranordnung 22 mit mindestens einem Sensor. Der Sensor ist hier eine Kamera 24. Es versteht sich, dass in anderen Ausführungsbeispielen die Sensoranordnung 22 auch eine andere Sensorart, mehrere Sensoren und/oder eine Kombination unterschiedlicher Sensoren umfassen kann.

Die Sensoranordnung 22 überwacht einen Überwachungsbereich 26, in dem sich der Kunde 16 bei einem Bezahlvorgang an der Selbstbedienungskasse 12 bewegt und aufhält. Der Überwachungsbereich 26 erstreckt sich somit zumindest über einen Bereich an der Selbstbedienungskasse 12 und kann weitere Bereiche, wie bspw. den Ausgang des Ladens umfassen. Der Überwachungsbereich 26 kann ein durchgängiger Bereich sein, oder aber eine Vielzahl einzelner Bereich umfassen, die zusammengenommen den gesamten Überwachungsbereich bilden.

Die Sensoranordnung 22 ist dazu ausgebildet, eine Fortbewegung 28 (hier durch die Doppelpfeile angedeutet) des Kunden 16 in dem Überwachungsbereich 26 zu bestimmen. Mit anderen Worten, die Sensoranordnung 22 ist dazu ausgebildet, eine absolute oder relative Position des Kunden 16 in dem Überwachungsbereich 26 anzugeben und eine örtliche Bewegung zu registrieren. In einem bevorzugten Ausführungsbeispiel kann die Sensoranordnung 22 eine örtliche Bewegung eines Kunden im Überwachungsbereich 26 darüber hinaus auch noch verfolgen.

Die erfindungsgemäße Sensoranordnung 22 ist ferner dazu ausgebildet, eine Geste 30 des Kunden zu erfassen. Die Geste 30 ist dabei ebenfalls eine Bewegung des Kunden, jedoch nicht eine Bewegung, um die Position im Überwachungsbereich zu verändern, sondern um eine Aktion auszuführen. Die Geste 30 entspricht somit bspw. einer Bewegung bei einer Interaktion mit einem Gegenstand, wie dem Bezahlautomat. Bei der Geste 30 handelt es sich demnach bspw. um eine charakteristische Bewegung, die von dem Kunden 16 notwendigerweise für einen für den Bezahlvorgang relevanten Vorgang ausgeführt werden muss. Die Geste 30 kann bspw. den Handbewegungen entsprechen, die beim Eintippen einer Geheimzahl, beim Einschieben einer Kreditkarte in einen dafür vorgesehenen Kartenleser oder beim Entnehmen eines Belegs ausgeführt werden.

Wie die Fortbewegung 28 wird die Geste 30 durch die Sensoranordnung 22 erfasst. Vorzugweise wird die Geste 30 von einem kamerabasierten Sensor 24 mit einer oder mehreren bildgebenden Einheiten erfasst. Die bildgebenden Einheiten werden genutzt, um Bilder des Kunden 16 zu erstellen. In einem bevorzugten Ausführungsbeispiel können auch Kamerasystem eingesetzt werden, die 3D-Daten bereitstellen, wie bspw. Time-of-Flight-Kameras oder sogenannte Structured-Light-Kameras. Alternativ kann eine Gestenerkennung auch per Stereoskopie erfolgen. Letzteres hat den Vorteil, dass diese ohne Infrarotlicht auskommt und somit auch im Freien funktioniert.

Die von der Sensoranordnung 22 aufgenommenen Informationen werden zu einem Signal 32 zusammengefasst und an eine Auswerteeinheit 34 übermittelt. Die Auswerteeinheit 34 umfasst eine Datenverarbeitungsvorrichtung 36, insbesondere zur technischen Bildanalyse, die hier als Server dargestellt ist. Es versteht sich, dass die Datenverarbeitungsvorrichtung 36 nicht auf einen Server beschränkt ist. In anderen Ausführungsbeispielen kann die Datenverarbeitungsvorrichtung 36 auch ein alleinstehender Rechner sein, oder aber eine cloudbasierte Datenverarbeitungsvorrichtung 36. Ebenso ist es denkbar, dass die Datenverarbeitungsvorrichtung 36 in einem anderen Ausführungsbeispiel ein dedizierte Mikrocontroller oder ein digitaler Signalprozessor (DSP) ist. Das System kann folglich als "Stand-alone-Lösung" oder als "Cloud-Lösung" oder als Mischform aus beiden betrieben werden.

Unabhängig von der Implementierung der Datenverarbeitungsvorrichtung 36 ist die Auswerteeinheit 34 dazu eingerichtet, ein Muster aus dem übermittelten Signal zu extrahieren, welches die Fortbewegung 28 des Kunden 16 sowie die Geste 30 repräsentiert. Dabei kommen Algorithmen zur Mustererkennung zum Einsatz. Ferner kann zur Entfernung von Rauschen in den Eingabedaten und zur Datenreduktion eine Vorbearbeitung der Sensordaten stattfinden. Anschließend können die Merkmale aus den Eingabedaten extrahiert werden. Die Merkmale dienen als Eingabe für die Klassifikation. Hierfür werden häufig Hidden Markov Models, künstliche neuronale Netze und weitere Techniken, die ihren Ursprung meist in der Forschung zur künstlichen Intelligenz haben, eingesetzt.

Die Auswerteeinheit 34 umfasst ferner einen Mustervorrat 38. Der Mustervorrat 38 ist vorzugsweise als Datenbank implementiert, in der eine Vielzahl für einen Bezahlvorgang relevanter Muster hinterlegt ist. Die relevanten Muster können beispielweise dadurch erzeugt werden, dass ein typischer Bezahlvorgang wiederholt abgebildet wird und charakteristische Merkmale aus den aufgenommenen Signalen extrahiert werden. Diese werden dann als relevante Muster in der Datenbank hinterlegt.

Im aktiven Betrieb wird das aus dem von der Sensoranordnung bereitgestellten Signal extrahierte Muster von der Auswerteeinheit 34 mit den relevanten Mustern des Mustervorrats verglichen, um zu erkennen, ob ein Bezahlvorgang stattgefunden hat. In Abhängigkeit der Erkennung können anschließend verschiedene Reaktionen ausgeführt werden.

Insbesondere kann die Auswerteeinheit 34 mit einer Ausgangsanlage gekoppelt sein, die sich automatisch nur für die Kunden öffnet, für die ein erfolgreich durchgeführter Bezahlvorgang erkannt worden ist. Die Ausgangsanlage kann bspw. eine an sich bekannte Ausgangschleuse oder eine automatische Tür sein.

Vorzugweise ist die Ausgangsanlage nur mit der Überwachungseinrichtung 14 gekoppelt, so dass diese zusammen ein eigenständiges, von der Selbstbedienungskasse 12 getrenntes System bilden. Dies hat den Vorteil, dass die Überwachungseinrichtung 14 und die Ausgangsanlage unabhängig von der Selbstbedienungskasse 12 bereitgestellt werden können. Auf diese Weise können auch ältere Selbstbedienungskassen 12 nachgerüstet werden.

Ein weiterer Vorteil der Trennung von Überwachungseinrichtung 14 und Selbstbedienungskasse 12 besteht darin, dass die Integration in ein bestehendes Kassensystem technisch sehr aufwendig ist und auch sicherheitstechnisch bedenklich sein kann. Oftmals ist eine Integration daher von Marktbetreibern nicht gewollt.

Ebenso kann das Zusammenführen von personenbezogenen Daten der Überwachungseinrichtung 14 und der Selbstbedienungskasse 12 problematisch sein, was durch eine strikte Trennung der Systeme vorteilhaft vermieden werden kann. Gleichwohl ist durch das erfindungsgemäße System eine präzise, kundenspezifisch Erfassung eines Bezahlvorgangs möglich.

Es versteht sich, dass die Erfindung nicht auf die vorstehenden Ausführungen beschränkt ist. Beispielsweise können anstelle oder zusätzlich zu optischen Sensoren auch Trackingsystem eingesetzten werden, die die Fortbewegung des Kunden anhand der Bewegung von Einkaufswagen und Einkaufskörben bestimmen. Insbesondere Indoor-Lokalisierungstechniken wie WIFI, LIFI, Beacons, BLE, RFID, Ultraschall können hierbei eingesetzt werden, um einen Kunden in einem definierten Bereich zu verfolgen. Der Kunde muss dabei selbst nicht identifiziert werden. Einkaufswagen und Einkaufskörben lassen sich besonders leicht mit entsprechenden Transpondern ausstatten.

Ebenso ist es denkbar, den Überwachungsbereich in verschiedene Zonen zu unterteilen und jedem Bereich eine eigene Sicherheitsanforderung zuzuteilen. Vorteilhaft kann dann anhand der Kundenposition mit unterschiedlichen Aktionen bis hin zur Blockade der Ausgangsanlage reagiert werden. Ebenso kann durch die Überwachungseinrichtung 14 verdächtiges Verhalten ermittelt werden, wie bspw. Zuwarten und Trödeln im Bereich der Selbstbedienungskassen.

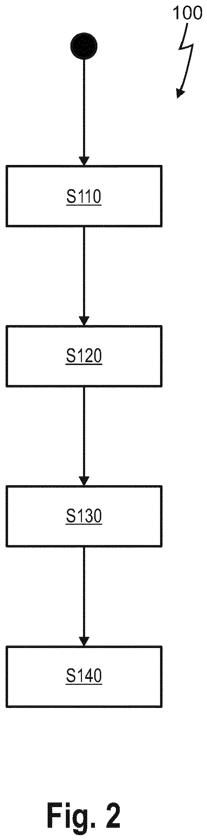

Fig. 2 zeigt in einem Ablaufdiagramm ein Ausführungsbeispiel des erfindungsgemäßen Verfahrens. Das Verfahren ist in seiner Gesamtheit mit der Bezugsziffer 100 bezeichnet.

Das Verfahren erfasst einen Bezahlvorgang an einer Selbstbedienungskasse 12 mit einem Bezahlautomaten 20, an denen ein Kunde 16 Waren selbst einscannt und bezahlt.

In einem ersten Schritt S110 wird eine Überwachungseinrichtung 14, die eine Sensoranordnung 22 und eine Auswerteeinheit 34 umfasst, bereitgestellt. Bereitstellen heißt insbesondere, dass die Hard- und Software der Überwachungseinrichtung 14 initialisiert wird. Dieser Vorgang kann unter anderem einen Kalibriervorgang der Sensoranordnung 22 und Selbsttests der Auswerteeinheit 24 beinhalten.

In einem zweiten Schritt S120 sendet die Sensoranordnung 22 ein Signal 32 an die Auswerteeinheit 34. Das Signal 32 repräsentiert eine Fortbewegung 28 des Kunden 16 in einem Überwachungsbereich 26 sowie eine Geste 30 des Kunden 16, die von der Sensoranordnung 22 erfasst worden sind.

Die Sensoranordnung erfasst über einen oder mehrere Sensoren eine Bewegung des Kunden in dem Überwachungsbereich 26 und sendet ein repräsentatives Signal an die Auswerteeinheit. Im Falle eines bildgebenden Sensors kann das Signal 32 ein Videosignal sein. Alternativ oder ergänzend kann das Signal 32 auch ein Datensignal sein, welches beispielsweise Positionsdaten in Form von Raumkoordinaten beinhaltet. Insbesondere kann das Signal 32 ein zusammengesetztes Signal sein, das die Daten verschiedener Sensoren zusammenfasst.

In einem dritten Schritt S130 extrahiert die Auswerteeinheit 34 ein Muster aus dem übermittelten Signal 32. Die Mustererkennung umfasst insbesondere, dass das Signal 32 bzw. die einzelnen Signale, die ein zusammengesetztes Signal bilden, automatisch in Kategorien eingeordnet werden. Zentraler Punkt ist dabei das Erkennen von Merkmalen, die allen Dingen einer Kategorie gemeinsam sind und sie vom Inhalt anderer Kategorien unterscheiden. Die Mustererkennung ist nicht auf eine bestimmte Form beschränkt und kann eine syntaktische, statistische und strukturelle Mustererkennung oder Mischformen beinhalten.

In einem abschließenden Schritt S140 vergleicht die Auswerteeinheit 34 das extrahierte Muster mit Mustern aus einem Mustervorrat 38, um einen Bezahlvorgang des Kunden 16 an dem Bezahlautomaten 20 zu erfassen. Sofern ein Bezahlvorgang des Kunden 16 des Kunden registriert wurde, kann die Überwachungseinrichtung 14 eine entsprechende Aktion auslösen.

Es versteht sich, dass das erfindungsgemäße Verfahren weitere Schritte umfassen kann, die vor, nach oder zwischen den hier dargestellten Schritten ausgeführt werden. Ebenso ist das Verfahren nicht auf den hier dargestellten Ablauf oder die dargestellte Reihenfolge beschränkt.

Insbesondere kann das Verfahren in einem bevorzugten Ausführungsbeispiel eine Interaktion mit einer Ausgangsanlage umfassen, wobei die Ausgangsanlage vorzugsweise unabhängig von der Selbstbedienungskasse durch die Überwachungseinrichtung angesteuert wird.

## Patentansprüche

1. Selbstbedienungskassensystem (10) umfassend:
eine Selbstbedienungskasse (12) mit einem Bezahlautomaten (20), an denen ein Kunde (16) Waren selbst einscannt und bezahlt; sowie
eine Überwachungseinrichtung (14) mit einer Sensoranordnung (22) und einer Auswerteeinheit (34),
wobei die Sensoranordnung (22) eine Kamera (24) aufweist und dazu eingerichtet ist, ein Signal (32) an die Auswerteeinheit (34) zu senden, welches eine Fortbewegung (28) des Kunden (16) in einem Überwachungsbereich (26) der Selbstbedienungskasse (12) repräsentiert, und
wobei die Auswerteeinheit (34) dazu eingerichtet ist, einen Bezahlvorgang des Kunden (16) an dem Bezahlautomaten (20) zu erfassen,
**gekennzeichnet dadurch, dass**
das Signal (32) zusätzlich eine Geste (30) des Kunden (16) repräsentiert, und
dass die Auswerteeinheit (34) dazu eingerichtet ist, ein für den Bezahlvorgang charakteristisches Muster aus dem Signal (32) zu extrahieren und mit Mustern aus einem Mustervorrat (38) zu vergleichen, um den Bezahlvorgang des Kunden (16) an dem Bezahlautomaten (20) unabhängig von einer Registrierung der Bezahlung durch den Bezahlautomaten (20) zu erfassen.

2. Selbstbedienungskassensystem nach Anspruch 1, wobei die Sensoranordnung (22) einen Sensor zur Lokalisierung von Einkaufswagen und/oder Einkaufskörben umfasst, insbesondere einen RFID-Leser zum Auslesen von RFID-Tags an den Einkaufswagen und/oder Einkaufskörben, und wobei die Fortbewegung (28) des Kunden in dem Überwachungsbereich (26) anhand der lokalisierten Einkaufswagen und/oder Einkaufskörbe erfolgt.

3. Selbstbedienungskassensystem nach Anspruch 1 oder 2, wobei die Muster aus dem Mustervorrat (38) sowohl Bewegungs- als auch Zeitprofile umfassen.

4. Selbstbedienungskassensystem nach einem der Ansprüche 1 bis 3, wobei die Auswerteeinheit (34) eine selbstlernende Einheit ist, die dazu eingerichtet ist, den Mustervorrat (38) dynamisch anzupassen.

5. Selbstbedienungskassensystem nach einem der Ansprüche 1 bis 4, wobei die Auswerteeinheit (34) mindestens eine Einheit zur Vernetzung mit einer Vielzahl weiterer Auswerteeinheiten aufweist, und der Mustervorrat (38) ein gemeinsamer Mustervorrat der Vielzahl weiterer Auswerteeinheiten und der Auswerteeinheit (34) ist.

6. Selbstbedienungskassensystem nach einem der Ansprüche 1 bis 5, wobei die Auswerteeinheit (34) ferner dazu ausgebildet ist, mindestens ein weiteres Muster aus dem Signal (32) zu extrahieren und mit Mustern aus einem weiteren Mustervorrat zu vergleichen, um ein weiteres definiertes Verhalten des Kunden (16) in dem Überwachungsbereich (26) zu erfassen.

7. Selbstbedienungskassensystem nach einem der Ansprüche 1 bis 6, wobei das Selbstbedienungskassensystem (10) ferner eine Ausgangsanlage umfasst, die dazu eingerichtet ist, in Abhängigkeit der Erfassung durch die Auswerteeinheit (34), den Kunden (16) am Verlassen des Überwachungsbereichs (26) zu hindern.

8. Selbstbedienungskassensystem nach einem der Ansprüche 1 bis 7, wobei das Selbstbedienungskassensystem (10) dazu eingerichtet ist, eine Aktion in Abhängigkeit der Erfassung durch die Auswerteeinheit (34) auszuführen.

9. Selbstbedienungskassensystem nach Anspruch 8, wobei das Selbstbedienungskassensystem ferner dazu eingerichtet ist, unterschiedliche Aktionen in Abhängigkeit einer Position des Kunden (16) in dem Überwachungsbereich (26) auszuführen.

10. Überwachungseinrichtung zur Erfassung eines Bezahlvorgangs an einer Selbstbedienungskasse (12) mit einer Sensoranordnung (22) und einer Auswerteeinheit (34), wobei die Sensoranordnung (22) eine Kamera (24) aufweist und dazu eingerichtet ist, ein Signal (32) an die Auswerteeinheit (34) zu senden, welches eine Fortbewegung (28) des Kunden (16) in einem Überwachungsbereich (26) der Selbstbedienungskasse (12) repräsentiert, und wobei die Auswerteeinheit (34) dazu eingerichtet ist, einen Bezahlvorgang des Kunden (16) an einem Bezahlautomaten (20) der Selbstbedienungskasse (12) zu erfassen,
**gekennzeichnet dadurch, dass**
das Signal (32) zusätzlich eine Geste (30) des Kunden (16) repräsentiert, und dass
die Auswerteeinheit (34) dazu eingerichtet ist, ein für den Bezahlvorgang charakteristisches Muster aus dem Signal (32) zu extrahieren und mit Mustern aus einem Mustervorrat (38) zu vergleichen, um den Bezahlvorgang des Kunden (16) an dem Bezahlautomaten (20) der Selbstbedienungskasse (12) unabhängig von einer Registrierung der Bezahlung durch den Bezahlautomaten (20) zu erfassen.

11. Verfahren zur Erfassung eines Bezahlvorgangs an einer Selbstbedienungskasse (12) mit einem Bezahlautomaten (20), an denen ein Kunde (16) Waren selbst einscannt und bezahlt, mit den Schritten:
- Bereitstellen einer Überwachungseinrichtung (14) mit einer Sensoranordnung (22), die eine Kamera (24) aufweist, und mit einer Auswerteeinheit (34);
- Senden eines Signals (32) von der Sensoranordnung (22) an die Auswerteeinheit (34), wobei das Signal (32) eine Fortbewegung (28) des Kunden (16) in einem Überwachungsbereich (26) der Selbstbedienungskasse (12) repräsentiert;
- Erfassen eines Bezahlvorgang des Kunden (16) an dem Bezahlautomaten (20) durch die Auswerteeinheit (34),
**gekennzeichnet dadurch, dass**
das Signal (32) zusätzlich eine Geste (30) des Kunden (16) repräsentiert, und dass
die Auswerteeinheit (34) ein für den Bezahlvorgang charakteristisches Muster aus dem Signal (32) extrahiert und mit Mustern aus einem Mustervorrat (38) vergleicht, um den Bezahlvorgang des Kunden (16) an dem Bezahlautomaten (20) der Selbstbedienungskasse (12) unabhängig von einer Registrierung der Bezahlung durch den Bezahlautomaten (20) zu erfassen.

## Claims

1. Self-service checkout system (10) comprising:
a self-service checkout (12) having an automatic payment system (20), at which a customer (16) scans and pays for products themself; and
a monitoring device (14) having a sensor arrangement (22) and an evaluation unit (34),
wherein the sensor arrangement (22) has a camera (24) and is configured to send a signal (32) to the evaluation unit (34), which represents a locomotion (28) of the customer (16) in a monitoring area (26) of the self-service checkout (12), and
wherein the evaluation unit (34) is configured to detect a payment process of the customer (16) at the automatic payment system (20),
**characterized in that**
the signal (32) additionally represents a gesture (30) of the customer (16), and **in that**
the evaluation unit (34) is configured to extract a pattern characteristic for the payment process from the signal (32) and to compare it to patterns from a pattern reserve (38), in order to detect the payment process of the customer (16) at the automatic payment system (20) independently of a registration of the payment by the automatic payment system (20).

2. Self-service checkout system according to Claim 1, wherein the sensor arrangement (22) comprises a sensor for localizing shopping carts and/or shopping baskets, in particular an RFID reader for reading RFID tags on the shopping carts and/or shopping baskets, and wherein the locomotion (28) of the customer in the monitoring area (26) takes place on the basis of the localized shopping carts and/or shopping baskets.

3. Self-service checkout system according to Claim 1 or 2, wherein the patterns from the pattern reserve (38) comprise both movement profiles and time profiles.

4. Self-service checkout system according to any one of Claims 1 to 3, wherein the evaluation unit (34) is a self-learning unit, which is configured to dynamically adapt the pattern reserve (38).

5. Self-service checkout system according to any one of Claims 1 to 4, wherein the evaluation unit (34) has at least one unit for networking with a plurality of further evaluation units, and the pattern reserve (38) is a common pattern reserve of the plurality of further evaluation units and the evaluation unit (34).

6. Self-service checkout system according to any one of Claims 1 to 5, wherein the evaluation unit (34) is furthermore designed to extract at least one further pattern from the signal (32) and to compare it to patterns from a further pattern reserve in order to detect a further defined behaviour of the customer (16) in the monitoring area (26).

7. Self-service checkout system according to any one of Claims 1 to 6, wherein the self-service checkout system (10) furthermore comprises an exit system, which is configured to prevent the customer (16) from departing the monitoring area (26) depending on the detection by the evaluation unit (34).

8. Self-service checkout system according to any one of Claims 1 to 7, wherein the self-service checkout system (10) is configured to execute an action depending on the detection by the evaluation unit (34).

9. Self-service checkout system according to Claim 8, wherein the self-service checkout system is furthermore configured to execute different actions depending on a position of the customer (16) in the monitoring area (26).

10. Monitoring device for detecting a payment process at a self-service checkout (12) having a sensor arrangement (22) and an evaluation unit (34), wherein the sensor arrangement (22) has a camera (24) and is configured to send a signal (32) to the evaluation unit (34), which represents a locomotion (28) of the customer (16) in a monitoring area (26) of the self-service checkout (12), and wherein the evaluation unit (34) is configured to detect a payment process of the customer (16) at an automatic payment system (20) of the self-service checkout (12),
**characterized in that**
the signal (32) additionally represents a gesture (30) of the customer (16), and **in that**
the evaluation unit (34) is configured to extract a pattern characteristic for the payment process from the signal (32) and to compare it to patterns from a pattern reserve (38) in order to detect the payment process of the customer (16) at the automatic payment system (20) of the self-service checkout (12) independently of a registration of the payment by the automatic payment system (20).

11. Method for detecting a payment process at a self-service checkout (12) having an automatic payment system (20), at which a customer (16) scans and pays for products themself, comprising the following steps:
- providing a monitoring device (14) having a sensor arrangement (22), which has a camera (24), and having an evaluation unit (34);
- sending a signal (32) from the sensor arrangement (22) to the evaluation unit (34), wherein the signal (32) represents a locomotion (28) of the customer (16) in a monitoring area (26) of the self-service checkout (12);
- detecting a payment process of the customer (16) at the automatic payment system (20) by way of the evaluation unit (34),
**characterized in that**
the signal (32) additionally represents a gesture (30) of the customer (16), and **in that**
the evaluation unit (34) extracts a pattern characteristic for the payment process from the signal (32) and compares it to patterns from a pattern reserve (38) in order to detect the payment process of the customer (16) at the automatic payment system (20) of the self-service checkout (12) independently of a registration of the payment by the automatic payment system (20).

## Revendications

1. Système de caisse en libre-service (10), comprenant :
une caisse en libre-service (12) munie d'un terminal de paiement (20) sur lequel un client (16) scanne lui-même des marchandises et les paie ; et
un dispositif de surveillance (14) muni d'un agencement de capteur (22) et d'une unité d'évaluation (34),
dans lequel l'agencement de capteur (22) présente une caméra (24) et est conçu pour envoyer à l'unité d'évaluation (34) un signal (32) qui représente un déplacement (28) du client (16) dans une zone de surveillance (26) de la caisse en libre-service (12), et
dans lequel l'unité d'évaluation (34) est conçue pour détecter un processus de paiement du client (16) sur le terminal de paiement (20),
**caractérisé en ce que** le signal (32) représente de plus un geste (30) du client (16), et
**en ce que** l'unité d'évaluation (34) est conçue pour extraire du signal (32) un motif caractéristique du processus de paiement et pour le comparer avec des motifs provenant d'un stock de motifs (38) afin de détecter le processus de paiement du client (16) sur le terminal de paiement (20) indépendamment d'un enregistrement du paiement par le terminal de paiement (20) .

2. Système de caisse en libre-service selon la revendication 1, dans lequel l'agencement de capteur (22) comprend un capteur pour localiser des chariots et/ou paniers d'achat, en particulier un lecteur RFID pour lire des étiquettes RFID sur les chariots et/ou paniers d'achat, et dans lequel le déplacement (28) du client dans la zone de surveillance (26) est effectué à l'aide des chariots et/ou paniers d'achat localisés.

3. Système de caisse en libre-service selon la revendication 1 ou 2, dans lequel les motifs provenant du stock de motifs (38) comprennent à la fois des profils de déplacement et des profils de temps.

4. Système de caisse en libre-service selon l'une quelconque des revendications 1 à 3, dans lequel l'unité d'évaluation (34) est une unité à auto-apprentissage qui est conçue pour adapter le stock de motifs (38) de manière dynamique.

5. Système de caisse en libre-service selon l'une quelconque des revendications 1 à 4, dans lequel l'unité d'évaluation (34) présente au moins une unité pour la mise en réseau avec une pluralité d'unités d'évaluation supplémentaires, et le stock de motifs (38) est un stock de motifs commun de la pluralité d'unités d'évaluation supplémentaires et de l'unité d'évaluation (34).

6. Système de caisse en libre-service selon l'une quelconque des revendications 1 à 5, dans lequel l'unité d'évaluation (34) est en outre réalisée pour extraire au moins un motif supplémentaire du signal (32) et pour le comparer avec un stock de motifs supplémentaire afin de détecter un comportement défini supplémentaire du client (16) dans la zone de surveillance (26).

7. Système de caisse en libre-service selon l'une quelconque des revendications 1 à 6, dans lequel le système de caisse en libre-service (10) comprend en outre une installation de sortie qui est conçue pour empêcher le client (16) de quitter la zone de surveillance (26) en fonction de la détection par l'unité d'évaluation (34).

8. Système de caisse en libre-service selon l'une quelconque des revendications 1 à 7, dans lequel le système de caisse en libre-service (10) est conçu pour exécuter une action en fonction de la détection par l'unité d'évaluation (34).

9. Système de caisse en libre-service selon la revendication 8, dans lequel le système de caisse en libre-service est en outre conçu pour exécuter différentes actions en fonction d'une position du client (16) dans la zone de surveillance (26).

10. Dispositif de surveillance permettant de détecter un processus de paiement au niveau d'une caisse en libre-service (12) à l'aide d'un agencement de capteur (22) et d'une unité d'évaluation (34), dans lequel l'agencement de capteur (22) présente une caméra (24) et est conçu pour envoyer à l'unité d'évaluation (34) un signal (32) qui représente un déplacement (28) du client (16) dans une zone de surveillance (26) de la caisse en libre-service (12), et dans lequel l'unité d'évaluation (34) est conçue pour détecter un processus de paiement du client (16) au niveau d'un terminal de paiement (20) de la caisse en libre-service (12),
**caractérisé en ce que** le signal (32) représente de plus un geste (30) du client (16), et
**en ce que** l'unité d'évaluation (34) est conçue pour extraire du signal (32) un motif caractéristique du processus de paiement et pour le comparer avec des motifs provenant d'un stock de motifs (38) afin de détecter le processus de paiement du client (16) sur le terminal de paiement (20) de la caisse en libre-service (12) indépendamment d'un enregistrement du paiement par le terminal de paiement (20).

11. Procédé permettant de détecter un processus de paiement au niveau d'une caisse en libre-service (12) munie d'un terminal de paiement (20) sur lequel un client (16) scanne lui-même des marchandises et les paie, comprenant les étapes consistant à :
- fournir un dispositif de surveillance (14) muni d'un agencement de capteur (22) qui présente une caméra (24), et d'une unité d'évaluation (34) ;
- envoyer un signal (32) de l'agencement de capteur (22) à l'unité d'évaluation (34), dans lequel le signal (32) représente un déplacement (28) du client (16) dans une zone de surveillance (26) de la caisse en libre-service (12) ;
- détecter un processus de paiement du client (16) sur le terminal de paiement (20) par l'unité d'évaluation (34),
**caractérisé en ce que** le signal (32) représente de plus un geste (30) du client (16), et
**en ce que** l'unité d'évaluation (34) extrait du signal (32) un motif caractéristique du processus de paiement et le compare avec des motifs provenant d'un stock de motifs (38) afin de détecter le processus de paiement du client (16) sur le terminal de paiement (20) de la caisse en libre-service (12) indépendamment d'un enregistrement du paiement par le terminal de paiement (20).
